# EUROPÄISCHE PATENTANMELDUNG

(11) **EP 1 840 264 A1**
(43) Veröffentlichungstag der Anmeldung: **03.10.2007**
(21) Anmeldenummer: 06112091.1
(22) Anmeldetag: 31.03.2006
(51) Int. Cl.: D21H 17/67, D21H 17/03, D21H 17/20, D21H 27/08

(54) **Mit Kohlenstoff angereichertes Papier**

(71) Anmelder: PTS (Papiertechnische Stiftung) München, 80797 München (DE)
(72) Erfinder: Hofenauer, Andreas Florian, 80802, München (DE); Markusch Ralf, 81925, München (DE)
(74) Vertreter: Behnisch, Werner

(57) **Zusammenfassung**

Die vorliegende Erfindung betrifft ein mit Kohlenstoff angereichertes Papier oder eine Pappe, wobei das Papier mindestens einen Faserstoff und mindestens einen Füllstoff, wobei als Füllstoff mindestens Kohlenstoff vorliegt. Der Gehalt an Kohlenstoff beträgt mindestens 15 Vol.-%, bezogen auf das Feststoffvolumen des Papiers, und der Gesamtfüllstoffgehalt aller vorliegenden Füllstoffe beträgt 30 bis 60 Gew.-%, bezogen auf das trockene Gesamtgewicht des Papiers, oder von 25 bis 90 Vol.-%, bezogen auf das Feststoffvolumen des Papiers. Das Papier weist bei einer Pyrolyse eine geringere Schrumpfung bzw. einen geringeren Gewichtsverlust gegenüber herkömmlichem Papier auf. Aus dem pyrolysierten Papier lassen sich beispielsweise durch Infiltration mit Silizium keramische Körper herstellen.

## Beschreibung

Die vorliegende Erfindung betrifft ein mit Kohlenstoff angereichertes Papier oder eine Pappe, ein Verfahren zur Herstellung eines solchen Papiers oder einer solchen Pappe, ein Verfahren zum Beschichten bzw. Infiltrieren eines solchen Papiers oder einer solchen Pappe, die Verwendung eines solchen Papiers oder einer solchen Pappe, ein Verfahren zur Pyrolyse eines solchen Papiers oder einer Pappe, ein pyrolysiertes Papier oder Pappe, die Verwendung eines pyrolysierten Papiers oder Pappe, ein Verfahren zum Weiterverarbeiten eines pyrolysierten Papiers zu einem keramischen Körper sowie den keramischen Körper selbst und dessen Verwendung.

Eine elegante Möglichkeit für die Herstellung dünnwandiger, komplex geformter Strukturkeramik, welche mit herkömmlichen Formgebungsverfahren wie z.B. Extrudieren oder Spritzguss nicht möglich sind, stellt der Einsatz von Papierstrukturen als Formgebungsinstrument dar. Dabei werden in erster Linie Papierstrukturen in keramische Schlicker eingetaucht und anschließend über Oxidation bzw. Pyrolyse und Sinterbrand in Keramikformteile überführt. Nachteilig in diesem Zusammenhang ist, dass in der Regel ein wiederholtes Eintauchen von Nöten ist, um die Papierstrukturen in einem ausreichenden Maß mit keramischen Füllstoffen anzureichern. Dadurch wird der Herstellungsprozess sehr aufwendig. Zudem ist eine gleichmäßige Verteilung der keramischen Füllstoffe nicht immer zu gewährleisten.

Eine andere Möglichkeit, Cellulosestrukturen in Keramikstrukturen umzuwandeln besteht mittels CVI (chemical vapour infiltration)-Verfahren. Dabei werden pyrolysierte Cellulosestrukturen keramisch beschichtet und anschließend durch Oxidation in poröse Keramiken wie beispielsweise SiC-, TiC oder TiO₂-Keramiken überführt. Dieser Prozess ist jedoch sehr aufwendig und zudem teuer.

Pyrolysierte Materialien biogenen Ursprungs werden auch anderweitig bereits seit längerer Zeit für die Herstellung von Siliziumcarbid-Keramiken verwendet. Das Vermischen von Kohlenstoff und/oder Graphitpulver mit einem hoch kohlenstoffhaltigen Bindemittel wie pech-, harz- oder zellulosehaltigen Lösungen, und anschließend das Pressen in eine Form und eine Aushärtung durch eine Wärmebehandlung hat den Nachteil, dass ein hoher apparativer Aufwand notwendig ist, und die Herstellung guter und reproduzierbarer Pulver- und Bindemittelqualitäten erfordert. Die Ausschussraten bei derartigen Verfahren liegen entsprechend hoch.

Die DE 101 61 108 beschreibt ein Verfahren, bei dem ein Keramikbauteil auf Basis von Kohlenstoff unter Verwendung von zellulosehaltigen Halbzeugformteilen hergestellt wird. Das in Form eines Halbzeugformteils gebildete präkeramische Bauteile wird in einer nicht oxidierenden Gasatmosphäre pyrolysiert und anschließend beispielsweise durch Flüssigphasen- bzw. Gasphasensilizierung zu einem SiC-haltigen Verbundkörper umgesetzt. Ein Nachteil dieses Verfahrens besteht jedoch darin, dass ein hoher Masseverlust und eine damit einhergehende hohe Schrumpfung des pyrolysierten Körpers bzw. Keramikkörpers gegenüber dem Grünkörper besteht.

Um diesen Nachteil auszugleichen und um den Kohlenstoffgehalt im endgültigen, pyrolysierten Körper zu erhöhen, schlägt die DE 199 47 731 A1 vor, den bereits pyrolysierten Körper der aus einem Halbzeug aus zellulosehaltigem Material mit pyrolysierbarem Bindemittel erhalten wird, erneut mit Bindemittel zu tränken und anschließend zu pyrolysieren. Durch diese weitere Zuführung von kohlenstoffhaltigem Material und die anschließende Pyrolyse wird der Kohlenstoffgehalt des Körpers zwar erhöht, die Schrumpfung des ursprünglichen Grünkörpers durch die Pyrolyse wird dadurch jedoch nicht vermindert bzw. verhindert. Eine endkonturnahe Fertigung eines keramischen Körpers aus einem Grünkörper wird somit nicht möglich.

Eine weitere Möglichkeit die Schrumpfung eines Grünkörpers, der Zellulose enthält, während der Pyrolyse zu vermindern, wird in der DE 103 29 822 A1 vorgeschlagen. Hier soll unter anderem die Zugabe von Russ den Kohlenstoffgehalt erhöhen. Nachteilig an diesem Verfahren ist jedoch, dass hierbei im Trockenen Holzspäne mit Russ und einem Bindemittel wie beispielsweise Phenolharz verpresst werden. Durch ein derartiges Verfahren lassen sich lediglich größere Formkörper herstellen. Feinere Strukturen, insbesondere unterhalb von 2 mm lassen sich derart nicht herstellen.

Eine Aufgabe der vorliegenden Erfindung liegt darin, ein Papier oder eine Pappe bereitzustellen, die einen hohen Kohlenstoffgehalt aufweist und bei der Pyrolyse eine verminderte Schrumpfung aufweist. Eine weitere Aufgabe der vorliegenden Erfindung ist es, ein Verfahren zur Herstellung eines derartigen Papiers oder Pappe bereitzustellen. Es ist eine weitere Aufgabe der vorliegenden Erfindung, ein Verfahren zur Beschichtung eines derartigen, mit Kohlenstoff angereicherten Papiers oder Pappe, ein Verfahren zur Pyrolyse eines derartigen Papiers oder Pappe sowie ein hoch kohlenstoffhaltiges, pyrolysiertes Papier oder Pappe bereitzustellen. Schließlich ist es eine Aufgabe der vorliegenden Erfindung, ein Verfahren zum Herstellen eines keramischen Körpers aus dem pyrolysierten Papier oder Pappe und einen keramischen Körper sowie eine Verwendung der keramischen Körper und des pyrolysierten Papiers sowie des Papiers in seinem Grünzustand bereitzustellen.

Die Aufgaben werden durch die unabhängigen Ansprüche gelöst.

Erfindungsgemäß wird ein mit Kohlenstoff angereichertes Papier oder Pappe bereitgestellt. Dabei enthält das Papier mindestens einen Faserstoff und mindestens einen Füllstoff, wobei als Füllstoff mindestens Kohlenstoff vorliegt. Der Gehalt an Kohlenstoff beträgt mindestens 15 Vol.-%, bezogen auf das Feststoffvolumen des Papiers, und der Gesamtfüllstoffgehalt aller vorliegenden Füllstoffe beträgt 30 bis 60 Gew.-%, bezogen auf das trockene Gesamtgewicht des Papiers, oder von 25 bis 90 Vol.-%, bezogen auf das Feststoffvolumen des Papiers.

Der Vorteil des mit Kohlenstoff angereicherten Papiers oder Pappe liegt darin, dass der Kohlenstoffgehalt verglichen mit herkömmlichen Papieren deutlich erhöht wird. Dadurch kann die Schrumpfung bei der Pyrolyse eines derartigen Papiers vermindert werden. Bei Experimenten hat sich herausgestellt, dass die Schrumpfung des Papiers bei der Pyrolyse nicht ausreichend vermindert werden kann, wenn der Kohlenstoffgehalt des Papiers weniger als 15 Vol.-% beträgt. Insbesondere weist das Papier der vorliegenden Erfindung einen hohen Anteil an Füllstoff auf. Dieser hohe Füllstoffgehalt wird durch die Verwendung besonderer Retentionsmittel erreicht.

Kohlenstoff ist ein unpolarer Stoff, der erst durch die Verwendung von Dispergiermitteln überhaupt in einer Lösung mit Zellulosefasern dispergiert werden kann. Es ist jedoch dabei von Nachteil, dass beim üblichen Papierherstellungsverfahren große Mengen von Kohlenstoff im Lösungsmittel, das üblicherweise Wasser ist, verbleiben. Die Anreicherung von Kohlenstoff in einem Papier kann nur durch die Wahl geeigneter Dispergier-, Benetzungs- und Retentionsmittel erfolgen. Durch die Verwendung von üblichen Papierherstellungsverfahren lassen sich insbesondere dünne Papiere mit einem hohen Kohlenstoffgehalt herstellen.

Gemäß einem zweiten Aspekt der vorliegenden Erfindung wird eine Verwendung eines mit Kohlenstoff angereicherten Papiers oder Pappe als Luftfilter, Sorptionsmedium für Gase oder Flüssigkeiten, als Elektrode, insbesondere als Batterieelektrode, oder im ABC-Schutz bereitgestellt.

Die Verwendung von Papier oder Pappe als Trägermedium für Kohlenstoff, insbesondere hochporösen Kohlenstoff, erlaubt die Herstellung von Luftfiltern und Sorptionsmedien in einfacher und ökonomischer Weise. Die weitere Verarbeitung eines Papiers gemäß der vorliegenden Erfindung zu beispielsweise einem Luftfilter und/oder einer Elektrode kann beispielsweise durch einfaches Zuschneiden erfolgen.

Gemäß einem weiteren Aspekt der vorliegenden Erfindung wird ein Verfahren zur Herstellung eines mit Kohlenstoff angereicherten Papiers oder einer mit Kohlenstoff angereicherten Pappe bereitgestellt. Das Verfahren umfasst das Vermischen eines Faserstoffs, insbesondere eines Zellulose-haltigen Stoffs mit mindestens einem Füllstoff, wobei mindestens ein Füllstoff Kohlenstoff umfasst, in einem Lösemittel, beispielsweise Wasser, zu einem Brei und anschließendes Verarbeiten des Breis mit papiertechnischen Verfahren zu einem Papier oder einer Pappe.

Ein vierter Aspekt der vorliegenden Erfindung richtet sich auf die Beschichtung eines mit Kohlenstoff angereicherten Papiers oder einer mit Kohlenstoff angereicherten Pappe mit einem Schlicker.

Gemäß einem fünften Aspekt der vorliegenden Erfindung wird das mit Kohlenstoff angereicherte Papier oder die mit Kohlenstoff angereicherte Pappe, die in Form eines Grünkörpers vorliegt, einer Pyrolyse unterworfen. Bei der Pyrolyse eines Papiers gemäß der vorliegenden Erfindung tritt gegenüber einem nicht mit Kohlenstoff angereicherten Papier eine verminderte Schrumpfung bzw. ein verminderter Gewichtsverlust auf.

Ein weiterer Aspekt der vorliegenden Erfindung betrifft ein pyrolysiertes Papier oder eine pyrolysierte Pappe, die aus einem mit Kohlenstoff angereicherten Papier oder einer mit Kohlenstoff angereicherten Pappe hergestellt wurde.

Gemäß noch einem weiteren Aspekt der vorliegenden Erfindung wird eine Verwendung eines pyrolysierten Papiers oder einer pyrolysierten Pappe als Luftfilter, Sorptionsmedium für Gase und/oder Flüssigkeiten, als Elektrode, insbesondere als Batterieelektrode, im ABC-Schutz, als dünnwandiges Konstruktionsmaterial oder für eine Brennstoffzelle bereitgestellt.

Ein weiterer Aspekt der vorliegenden Erfindung offenbart das Sintern eines Papiers oder einer Pappe gemäß der Erfindung oder eines pyrolysierten Papiers oder einer pyrolysierten Pappe, das als weiteren Füllstoff neben Kohlenstoff einen keramischen, sinterbaren Füllstoff aufweist, bei einer Temperatur von über 1200°C, bevorzugt über 1400°C.

Ein weiterer Aspekt der vorliegenden Erfindung betrifft das Infiltrieren eines mit Kohlenstoff angereicherten Papiers oder einer mit Kohlenstoff angereicherten Pappe, oder eines pyrolysierten Papiers oder einer pyrolysierten Pappe, mit einem flüssigen Metall.

Noch ein weiterer Aspekt der vorliegenden Erfindung betrifft einen keramischen Körper, der durch Infiltrieren eines mit Kohlenstoff angereicherten Papiers oder eines pyrolysierten Papiers mit einem flüssigen Metall herstellbar ist.

Ein letzter Aspekt der vorliegenden Erfindung betrifft die Verwendung eines keramischen Körpers, der aus einem mit Kohlenstoff angereicherten Papier oder Pappe als präkeramischem Körper hergestellt wurde, bei der Mikro-, Ultrat- oder Nanofiltration, für keramische Porenbrenner, als keramische Bauelemente, insbesondere für keramische Wärmetauscher und für Dünnschichtsolarzellen.

Wenn im folgenden von Papier und/oder Pappe gesprochen wird, so soll dies Papier und Pappe umfassen. Die Begriff Papier und Pappe werden in dieser Anmeldung synonym verwendet. Unter dem Begriff Papier oder Pappe soll ein zellulosehaltiges Produkt verstanden werden, das durch papiertechnische Herstellungsverfahren nasstechnisch erzeugt wird.

In den abhängigen Ansprüchen finden sich vorteilhafte Weiterbildungen und Verbesserungen des jeweiligen Erfindungsgegenstandes.

Gemäß einer bevorzugten Weiterbildung der vorliegenden Erfindung liegt der Gehalt an Kohlenstoff in dem Papier oder der Pappe bei mindestens 20 Vol.-%, bevorzugt mindestens 25 Vol.-% und besonders bevorzugt mindestens 40 Vol.-%. Gemäß einer anderen bevorzugten Weiterbildung der vorliegenden Erfindung beträgt der Gesamtfüllstoffgehalt in dem Papier oder der Pappe 40 bis 70 Vol.-%. Die Angabe Vol.-% bezieht sich dabei auf das Feststoffvolumen des Papiers oder der Pappe. Eventuell in dem Papier oder der Pappe vorliegende Hohlräume wie Poren tragen nicht zum Feststoffvolumen des Papiers oder der Pappe bei. Das Feststoffvolumen ist daher vom Grad der Komprimierung des Papiers oder der Pappe unabhängig. Der Grad der Komprimierung eines Papiers kann wunschgemäß durch Kalandieren eingestellt werden. Dabei werden die Hohlräume im Papier verkleinert, und das Papier verdichtet. Die Zusammensetzung des Papiers wird dabei jedoch nicht verändert. Folglich soll auch die Zusammensetzung des Papiers unabhängig vom Verdichtungsgrad des Papiers sein.

Gemäß einer weiteren bevorzugten Weiterbildung der vorliegenden Erfindung wird Kohlenstoff in Form von Graphit, Aktivkohle, Russ, Diamant, Diamantfeinstaub, Fullerenen, Kohlenstoff-Nanotubes oder Kohlenstofffasern eingebracht. Es ist dabei möglich, jede erdenkliche Modifikation des Kohlenstoffs zu verwenden.

Insbesondere soll in der vorliegenden Anmeldung der Begriff Kohlenstoff für das chemische Reinelement Kohlenstoff in seiner Oxidationsstufe 0 verwendet werden. Lediglich wenn gesondert darauf hingewiesen wird, kann Kohlenstoff auch in seiner gebundenen Form vorliegen. Beispielsweise können Phenolharze oder Zellulosefasern als Kohlenstoff enthaltende Materialien bezeichnet werden. Diese Materialien weisen in ihrer Struktur Kohlenstoff in anderen Oxidationsstufen als der Oxidationsstufe 0 auf. Diese Materialien bilden bei der Pyrolyse elementaren Kohlenstoff. Derartige Kohlenstoff enthaltende Materialien werden jedoch nicht als beispielsweise Kohlenstoff angereichertes Material bezeichnet. Der Begriff Kohlenstoff wird daher in dieser Erfindung stets für das reine Element Kohlenstoff in seiner Oxidationsstufe 0 verwendet, sollte dies nicht gesondert angegeben sein oder sich eindeutig aus dem Kontext ergeben.

Gemäß einer weiteren bevorzugten Weiterbildung der vorliegenden Erfindung können in dem Papier oder in der Pappe neben Kohlenstoff weitere Füllstoffe vorliegen. Diese Füllstoffe können beispielsweise metallische Füllstoffe, bevorzugt Metalle wie beispielsweise Aluminium, Kupfer und/oder Silizium sein. Silizium wird in diesem Zusammenhang als Metall bezeichnet. Es können jedoch auch keramische Füllstoffe, bevorzugt in Form von Carbiden, Oxiden, Nitriden und/oder Boriden vorliegen. Besonders bevorzugte keramische Füllstoffe schließen Siliziumcarbid, Borcarbid, Titatcarbid, Aluminiumoxid, Zirkoniumoxid, Titandioxid, Siliziumnitrid, Aluminiumnitrid, Bornitrid und Borcarbid ein. Auch die Verwendung von ligno-zellulosehaltigen Füllstoffen und/oder organischen Füllstoffen wie beispielsweise Phenolharze soll von der Erfindung mitumfasst werden.

Gemäß einer anderen bevorzugten Weiterbildung der vorliegenden Erfindung liegt der Kohlenstoff und/oder die weiteren Füllstoffe als Pulver und/oder Fasern vor. Bevorzugte Partikelgrößen bzw. Faserdurchmesser umfassen weniger als 50 µm, insbesondere weniger als 30 µm.

Das Papier oder die Pappe gemäß der vorliegenden Erfindung kann in einer weiteren Ausgestaltung zusätzlich organische Bindemittel umfassen. Organische Bindemittel sind dabei diejenigen organischen Bindemittel, die einem Fachmann bei der Herstellung von Papier und/oder Pappe geläufig sind und können beispielsweise Phenolharze umfassen.

Gemäß einer anderen bevorzugten Ausgestaltung der vorliegenden Erfindung werden als Faserstoff für das Papier oder die Pappe die bei der Papierherstellung üblicherweise verwendeten Faserstoffe, wie beispielsweise Sulfatzellstoff, Sulfidzellstoff, nach thermomechanischen Verfahren (TMP) hergestellter Zellstoff, nach chemo-thermomechanischem Verfahren (CTMP) hergestellter Zellstoff, Baumwolle, Linters und/oder Holzschliff, verwendet.

Das gemäß einer anderen bevorzugten Ausgestaltung der vorliegenden Erfindung hergestellte Papier oder die Pappe weist eine Dicke von 50 bis 20000 µm, bevorzugt von 100 bis 1500 µm auf.

Das Papier oder die Pappe kann weitere Zusatzstoffe enthalten. Bevorzugte Zusatzstoffe sind beispielsweise Benetzungs- und/oder Dispergiermittel. Diese Benetzungs- und/oder Dispergiermittel ermöglichen die Dispersion der unterschiedlichen Stoffe in dem Lösungsmittel. Benetzungs- und/oder Dispergiermittel können kationisch- und/oder anionisch-stabilisierende Mittel, wie beispielsweise Polyacrylate oder andere Polymere sein. Ein bevorzugtes Dispergiermittel ist beispielsweise ein Natriumpolyacrylat, insbesondere Polysalz-S (BASF AG, Ludwigshafen) als anionisch-stabilisierendes Mittel.

Ein bevorzugt verwendetes Benetzungsmittel schließt Lumiten P-F (BASF AG), ein Proyplen-Ethylen-Blockcopolymerisat, ein. Die Benetzungs- und/oder Dispergiermittel werden in für den Fachmann üblichen Mengen eingesetzt. Beispielsweise kann das Benetzungs- und/oder Dispergiermittel in einer Menge von 0,05 bis 5 Gew.-%, bevorzugt in einer Menge von 0,1 bis 3 Gew.-% eingesetzt werden.

Bevorzugt werden zudem Retentionsmittel zur Retention der Füllstoffe bei der Papierherstellung verwendet. Dabei können alle im Stand der Technik bekannten Retentionsmittel gemäß der vorliegenden Erfindung verwendet werden. Insbesondere bevorzugt werden geladenes Latex und/oder geladene Stärke, bevorzugt in einem Anteil von 0,2 bis 15 Gew.-% und insbesondere bevorzugt mit einem Anteil von 1 bis 10 Gew.-%, bezogen auf die Trockenmasse des Papiers oder der Pappe (atro), verwendet. Weitere bevorzugte Retentionsmittel sind in der Papierherstellung bekannte Polymere, insbesondere Polyvinylamine, Polyacrylamide, Polyamidamine, aber auch anorganische Retentionsmittel wie Aluminiumsulfat und/oder Bentonit. Die Polymere oder die anorganischen Retentionsmittel werden bevorzugt in einer Menge von 0,01 bis 7 Gew.-% und besonders bevorzugt von 0,1 bis 2 Gew.-%, bezogen auf das trockene Gesamtgewichts des Papiers oder der Pappe, verwendet.

Gemäß einer weiteren bevorzugten Ausgestaltung der vorliegenden Erfindung weist das Papier bei einer vollständigen Pyrolyse einen Gewichtsverlust von weniger als 50 Gew.-%, bevorzugt weniger als 40 Gew.-%, insbesondere bevorzugt weniger als 30 Gew.-% und am bevorzugtesten von weniger als 20 Gew.-%, bezogen auf das trockene Gesamtgewicht des Papiers oder der Pappe, auf.

Das Papier oder die Pappe kann bevorzugt papiertechnisch geformt vorliegen, zum Beispiel als Wellpappe, Waben- oder Rohrstruktur.

Ziel der vorliegenden Erfindung ist es, ein mit elementarem Kohlenstoff angereichertes Papier oder eine mit elementarem Kohlenstoff angereicherte Pappe bereitzustellen. Dabei ist es besonders wichtig, dass der Kohlenstoff homogen in dem Papier oder der Pappe verteilt ist, und der pyrolysierte Körper eine ausreichende Porosität aufweist, damit der Kohlenstoff in einen keramischen Körper umgewandelt werden kann.

Der Kohlenstoffeintrag eines pyrolysierten Körpers kann aus verschiedenen Quellen stammen. Zum einen kann der Kohlenstoff direkt bei der Papierherstellung eingebracht werden. Weiterhin tragen die Zellulosefasern des Papiers bei der Pyrolyse zum Kohlenstoffgehalt des pyrolysierten Papiers bei. Schließlich können auch weitere Zusatzstoffe wie beispielsweise Bindemittel, insbesondere Phenolharz, oder auch Retentionsmittel wie Latex oder Stärke sowie ligno-cellulosehaltige Zusätze in pyrolysierter Form zum Kohlenstoffgehalt beitragen. Der Kohlenstoffgehalt ebenso wie die Struktur des pyrolysierten Körpers, insbesondere die Mikro- und Porenstruktur, kann über die Anteile dieser Stoffe gesteuert werden. Feine ligno-cellulosehaltige Pulver führen beispielsweise nach der Pyrolyse zu einer homogenen Kohlenstoffmikrostruktur mit einer homogenen räumlichen Porenverteilung, welche eine gleichmäßige Infiltration beispielsweise mit flüssigem Silizium und eine gute Konvertierung des Kohlenstoffes zu Siliziumcarbid ermöglicht.

Zudem ist es wichtig, dass der Grünkörper während der Pyrolyse lediglich eine geringe Schrumpfung bzw. Gewichtsverlust aufweist. Herkömmliches Papier weist bei einer Pyrolyse einen Gewichtsverlust von etwa 70 Gew.-% auf. Besonders kohlenstoffreiche Verbindungen, wie beispielsweise ein Phenolharz, weisen dagegen einen geringeren Gewichtsverlust bei der Pyrolyse auf. Durch die Verwendung von elementarem Kohlenstoff in dem Papier kann der Gewichtsverlust während der Pyrolyse weiter reduziert werden, da elementarer Kohlenstoff während der Pyrolyse keinen oder annähernd keinen Gewichtsverlust aufweist. Durch einen geringen Gewichtsverlust wird es möglich, den Grünkörper entkonturnah zu gestalten.

Der maximale Füllstoffeintrag in ein Papier oder eine Pappe ist beschränkt durch den Verlust der Integrität des Papiers oder der Pappe bei einem zu hohen Füllstoffgehalt. Der maximale Füllstoffgehalt wird daher auf 90 Vol.-%, bezogen auf das Feststoffvolumen des Papiers oder der Pappe, beschränkt. Der Zusammenhang zwischen einem Füllstoffgehalt gemessen in Vol.-% und einem Füllstoffgehalt in Gew.-% wird über die Dichte der Füllstoffe hergestellt. Wird lediglich Kohlenstoff als Füllstoff verwendet, so entspricht ein Anteil von 15 Vol.-% Kohlenstoff einem Gewichtsanteil von 20 Gew.-%. Ein Anteil von 20 Vol.-% entspricht einem Anteil von 25 Gew.-%. Werden schwerere Füllstoffe, wie beispielsweise keramische Füllstoffe zusätzlich verwendet, sinkt der Gewichtsanteil der Kohlenstofffraktion. Der Anteil der Füllstoffe, die ein Papier maximal aufnehmen kann, hängt jedoch vornehmlich von dem Volumen der Füllstoffe ab. Daher wird der Anteil der Füllstoffe bevorzugt als Volumenanteil angegeben.

Das Papier oder die Pappe können zudem nach der Herstellung, d.h. als Grünkörper, und/oder nach der Pyrolyse beschichtet werden. Diese Beschichtung erfolgt bevorzugt mit einem Material, das eine ähnliche Schrumpfung und einen ähnlichen Gewichtsverlust wie das Papier besitzt. Somit wird verhindert, dass Spannungen zwischen der Beschichtung und dem Papier während der Pyrolyse auftreten. Dem Beschichtungsmaterial werden daher ähnliche Stoffe beigemischt, wie sie auch das Papier selbst aufweist. Auch die Anteile der Zusammensetzung sind bevorzugt ähnlich denen des Papiers. Anstelle von Zellulosefasern können hier beispielsweise Holzmehle beigefügt werden.

In einen Schlicker für eine Beschichtung können demnach ebenfalls Zellulosefasern, Kohlenstoff sowie weitere Zusatzstoffe, wie beispielsweise Bindemittel, Dispergiermittel, Retentionsmittel und Benetzungsmittel zugegeben werden. Auch keramische oder andere Füllstoffe können dem Beschichtungsschlicker beigemischt werden.

Zur Herstellung eines Papiers oder Pappe gemäß der vorliegenden Erfindung werden Faserstoffe und Füllstoffe in einem Lösungsmittel vermischt. Als Lösungsmittel kommt bevorzugt Wasser zum Einsatz. Die Faserstoffe müssen zusammen mit den Füllstoffen einen homogenen Brei geben. Bei Verwendung von elementarem Kohlenstoff, beispielsweise Russ, ist jedoch eine homogene Verteilung und Aggregation des Kohlenstoffs an die Faserstoffe nur schwer zu erreichen. Erfolgt keine Bindung des Kohlenstoffs an die Fasern, wird der Eintrag an Kohlenstoff an dem endgültigen Papier nur sehr gering sein, da ein Großteil des Kohlenstoffes nicht durch das Papiersieb beim Papierherstellungsprozess zurückgehalten wird und dem endgültigen Papier dadurch nicht zur Verfügung steht. Daher ist es vorteilhaft, um einen hohen Anteil an Kohlenstoff in dem endgültigen Papier oder der Pappe zu erreichen, wenn die Kohlenstoffpartikel oder Fasern an den Faserstoff gebunden werden können.

Die Bindung der Kohlenstoffpartikel kann beispielsweise über elektrostatische Anziehungskräfte an den Faserstoff erfolgen. Um eine derartige Bindung zu erreichen, können sogenannte Retentionsmittel zugegeben werden. Die Kombination der Retentionsmittel kann die Bindung der Kohlenstoffpartikel an die Faserstoffe und somit die Retention des Kohlenstoffs in dem Papier oder der Pappe maßgeblich beeinflussen.

Bevorzugt werden hier Latex und Stärke, die jeweils auch geladen sein können. Latex und/oder Stärke werden bevorzugt in einem Anteil von 0,2 bis 15 Gew.-%, besonders bevorzugt von 1 bis 10 Gew.-% bezogen auf das trockene Gesamtgewicht (atro) des Papiers oder der Pappe zugegeben. Auch andere Retentionsmittel, insbesondere Polymere, wie beispielsweise Polyvinylamin, Polyacrylamid und Polyamidamin, oder anorganische Retentionsmittel wie Aluminiumsulfat und/oder Bentonit können als Retentionsmittel verwendet werden. Diese werden bevorzugt in einer Menge von 0,01 bis 7 Gew.-%, und besonders bevorzugt von 0,1 bis 2 Gew.-% bezogen auf das trockene Gesamtgewicht des Papiers oder der Pappe verwendet. Auch eine Kombination mehrerer Retentionsmittel ist möglich. Besonders bevorzugt ist eine Kombination von geladenem Latex oder geladener Stärke mit einem polymeren Retentionsmittel. Durch eine derartige Kombination von Retentionsmitteln wird ein hoher Grad an Füllstoffgehalt im endgültigen Papier erreicht.

Nachdem die Füllstoffe, insbesondere der Kohlenstoff, an die Fasern gebunden worden sind, kann der Brei zu einem Papier oder zu einer Pappe mit herkömmlichen papiertechnischen Verfahren verarbeitet werden. Anschließend kann das Papier oder die Pappe papiertechnisch zu Wellpappe, Wabenbinde- oder Rohrstrukturen geformt werden.

Präkeramische Körper können auch nach dem LOM (laminated object manufacturing)-Verfahren hergestellt werden. Das LOM-Verfahren ist ein dem Rapid-Prototyping-Verfahren ähnliches Verfahren. Dabei entsteht ein Vor-Körper durch Aufeinanderkleben von vielen Papierschichten.

Die Beschichtung eines Papiers oder einer Pappe erfolgt ebenfalls nach bekannten papiertechnischen Verfahren. Der Schlicker kann dabei beispielsweise auf das Papier gestrichen werden. Es ist jedoch auch möglich, das Papier in einem Tauchprozess mit einem Schlicker zu infiltrieren.

Bei der Pyrolyse eines derart hergestellten, mit Kohlenstoff angereicherten Papiers oder einer Pappe werden chemische Verbindung, die Kohlenstoff in gebundener Form aufweisen, zu amorphem Kohlenstoff umgewandelt. Diese Pyrolyse erfolgt bevorzugt in Inertgasatmosphäre, beispielsweise Stickstoff- oder Argonatmosphäre, oder im Vakuum. Bei der Pyrolyse wird der Temperaturbereich bis 500°C bevorzugt langsam durchschritten, um eine vollständige Pyrolyse zu erreichen. Die Pyrolyse wird bis 1200°C, bevorzugt bis 800°C durchgeführt.

Bei der Pyrolyse entsteht ein Körper, der die ursprüngliche Struktur der Zellulosefasern, der Binde-, Dispergier- und Retentionsmittel und der darin eingebundenen Füllstoffe in einer Kohlenstoffstruktur abbildet. Keramische und/oder metallische Füllstoffe bleiben bei der Pyrolyse bevorzugt unverändert. Die Zellulosefasern stellen somit dem pyrolysierten Körper eine natürliche Porosität bereit. Die Porenstruktur ist biogen. Durch die Verwendung unterschiedlicher Materialien ebenso wie unterschiedlicher Anteile der Materialien kann die Porenstruktur gezielt eingestellt werden. Die Porenstruktur kann bei einem anschließenden Verfahren zur Umwandlung des pyrolysierten Papiers in einen keramischen Körper abgebildet werden. Durch die Porosität des pyrolysierten Papiers wird beispielsweise bei einer Siliziuminfiltration dem flüssigen Silizium ermöglicht, in das pyrolysierte Papier einzudringen und alle Bereiche es pyrolysierten Papiers zu infiltrieren.

In das Papier kann ein keramischer oder metallischer Füllstoff eingearbeitet werden. Dieser keramische bzw. metallische Füllstoffe wird bei der Pyrolyse üblicherweise nicht verändert. Keramische Füllstoffe können bei Temperaturen von bevorzugt oberhalb von 1200°C, insbesondere bevorzugt von über 1400°C gesintert werden. Beim Sintern derartiger Körper werden die keramischen Füllstoffe miteinander verbacken. Die Struktur wird somit dauerhaft gefestigt. Beim Einbringen von Metallen als Füllstoffen bzw. beim Eintauchen eines pyrolysierten Papiers in flüssiges Metall kann der Körper in einen keramischen Körper überführt werden. Dies soll im folgenden exemplarisch anhand von Silizium dargestellt werden. Es ist jedoch auch möglich, andere Carbid-bildende Metalle zu verwenden.

Wird Silizium in Form von Siliziumfüllstoffen direkt in das Papier eingebracht, oder wird das pyrolysierte Papier in flüssiges Silizium eingetaucht, so reagiert der elementare Kohlenstoff mit dem elementaren Silizium zu Siliziumcarbid. Durch die Umwandlung des Kohlenstoffs in Siliziumcarbid wird die ursprüngliche Struktur des Kohlenstoffs, insbesondere die poröse Struktur in dem Siliziumcarbid abgebildet. Zusätzlich können Bereiche mit reinem Silizium bzw. Bereiche mit reinem Kohlenstoff nach der Umwandlung vorliegen. Bereiche von elementarem Kohlenstoff können beispielsweise in Form von Graphit vorliegen und als Schmiermittel insbesondere bei der Verwendung von derartigen Keramiken bei Anwendungen, bei denen der Abrieb der Keramiken vorgesehen ist, beispielsweise bei Bremsscheiben, dienen. Bereiche mit elementarem Kohlenstoff können beispielsweise auch Kohlenstofffasern sein, die während des Silizierprozesses aufgrund ihrer Kompaktheit oder Oberflächenbeschaffenheit nicht in Siliziumcarbid umgewandelt werden und daher auch nach dem Silizieren als Kohlenstofffaser vorliegen. Sie können in dem resultierenden keramischen Verbundwerkstoff eine Faserverstärkung darstellen.

Der Anteil des sich bildenden Siliziumkarbides kann durch die Steuerung der Verdichtung des Papiers beeinflusst werden. Mit zunehmender Verdichtung liegt nach der Pyrolyse mehr Kohlenstoff pro Volumeneinheit vor, welcher mit Silizium zu Siliziumcarbid umgesetzt werden kann. Eine allzu starke Verdichtung setzt die Infiltrierbarkeit des Kohlenstoffkörpers herab und führt vermehrt zu nicht umgesetztem Kohlenstoff in dem resultierenden keramischen Verbundwerkstoff.

Eine weitere Möglichkeit, den Siliziumcarbidanteil in dem resultierenden keramischen Verbundwerkstoff zu erhöhen, stellt der Einsatz von Siliziumcarbidpulver als zusätzlichen Füllstoff bei der Papierherstellung dar. Dieser Füllstoff ergänzt in dem resultierenden Werkstoff das Siliziumcarbid, welches sich aus der Reaktion des Siliziums mit dem Kohlenstoff des pyrolysierten Papiers gebildet hat. Das Infiltrieren erfolgt bevorzugt in Inertgasatmosphäre bei einer Temperatur oberhalb des Schmelzpunkts des Metalls und bevorzugt bis zu einer Temperatur von 1800°C. Durch die Infiltration mit Silizium können auch Bereiche mit reinem Silizium in dem Körper vorliegen. Dadurch entsteht ein sogenannter MMC (Metall-Matrix-Composite)-Körper, insbesondere eine Si-SiC-Keramik.

Die verschiedenen Papiere der vorliegenden Erfindung können vielfältig verwendet werden. Im folgenden sollen einige Verwendung genannt werden, ohne jedoch darauf beschränkt zu sein.

Im Grünzustand kann das mit Kohlenstoff angereicherte Papier beispielsweise als physikalisch/chemisch aktiver, dünner und flächiger Verbundwerkstoff verwendet werden. Solche Verwendungen schließen die Verwendung als Luftfilter, als Sorptionsmedium für Gase und/oder Flüssigkeiten und im ABC-Schutz ein. Da Kohlenstoff auch als elektrisch leitfähige Modifikation eingebracht werden kann, können die Papiere auch als Batterieelektroden verwendet werden.

Nach der Pyrolyse können die entstandenen Kohlenstoffstrukturen ebenfalls als Luftfilter, als Sorptionsmedium für Gase und/oder Flüssigkeiten sowie im ABC-Schutz verwendet werden. Auch die Verwendung als Batterieelektrode ist nach wie vor möglich. Zudem können die pyrolysierten Papiere als dünnwandige Konstruktionsmaterialien sowie für Brennstoffzellen verwendet werden.

Nach einer Infiltration bzw. Keramisierung können die keramischen Membranen bevorzugt bei der Gas und/oder Flüssigfiltration, insbesondere in der Mikro-, Ultra- und/oder Nanofiltration verwendet werden. Insbesondere sind durch die papiertechnischen Herstellungsverfahren Filterkonstruktionen realisierbar, welche mittels konservativer Verfahren wie beispielsweise Extrudieren nicht realisiert werden können. Es können großflächige, dünne, insbesondere kleiner 500 µm dicke, keramische Substrate hergestellt werden. Diese können durch papiertechnische Streichverfahren auch als Mehrschichtsysteme realisiert werden. Somit können unterschiedliche Eigenschaften in einem einzigen keramischen Filter realisiert werden.

Auch als Porenbrenner können keramisierte Papiere vorteilhaft eingesetzt werden. Insbesondere sind derartige Papiere gegenüber höheren Temperaturen, beispielsweise Temperaturen von 2000°C gegenüber inert. Bei Brennersystemen soll die Porengröße im Bereich von 2 bis 6 mm liegen. Solche Porengrößen können durch Wellenstrukturen, wie sie effektiv mit der papiertechnischen Formgebung erreicht werden können, leicht realisiert werden. Daher sind keramisierte Pappen für einen Einsatz im Bereich der Porenbrenner insbesondere bevorzugt.

Zudem können keramisierte Papiere dazu dienen, dünnwandige und dichte Keramikelemente herzustellen. Derartige Bauelemente sind beispielsweise für keramische Wärmetauscher von großem Interesse. Auch im Bereich von Dünnschichtsolarzellen können keramisierte Papiere verwendet werden.

Die vorliegende Erfindung wird im Folgenden anhand bevorzugter Ausführungsbeispiele und begleitenden Figuren beschrieben. Diese Beispiele sollen jedoch den Geltungsbereich der vorliegenden Erfindung nicht beschränken, sondern der Geltungsbereich soll lediglich durch die beigefügten Ansprüche definiert werden. In den Figuren zeigen:
Fig. 1 eine REM-Aufnahme eines mit Graphit angereicherten Papiers; und
Fig. 2 eine REM-Aufnahme eines mit Russ angereicherten Papiers.

### Beispiele

### 1. Graphitpapier, unbeschichtet:

Herstellung eines kreisrunden Laborblattes mit einem Durchmesser von 20 cm und einem Flächengewicht von 320 g/m² am Laborblattbildner nach dem Rapid-Köthen-Verfahren:
Zu 900g einer Zellstoffsuspension (Feststoffgehalt 0,5 Gew.-%) werden 13,5 g kationisches Polymer (Katiofast VFH Feststoffgehalt 0,2 Gew.-%), 9 g Graphitslurry (4,5 g Wasser + 4,5 g Graphitpulver + 4,5 g Benetzungsmittel (Feststoffgehalt 0,2 Gew.-%) + 0,9 g Dispergiermittel (Feststoffgehalt 0,2 Gew.-%)) und 24 g Latexemulsion (Feststoffgehalt 4 Gew.-%) zugegeben. Der entstandene Brei wird zu einem Blatt ausgebildet. Das entstandene Blatt wird anschließend getrocknet. Es entsteht ein Papier mit folgender Zusammensetzung:

| **Komponenten:** | **Anteil am Gesamtpapier (atro)** |
|---|---|
| Zellstoff: Nadelholzzellstoff ungebleicht | 44,99 Gew.-% |
| Graphitpulver (< 10 µm) | 44,99 Gew.-% |
| Latex, Hycar 1562X117, Noveon (anionisch) | 9,60 Gew.-% |
| Catiofast VFH (kationisches Polymer) | 0,30 Gew.-% |
| Benetzungsmittel Lumiten P-F, BASF (für Graphit) | 0,10 Gew.-% |
| Dispergiermittel Polysalz S, BASF (für Graphit) | 0,02 Gew.-% |

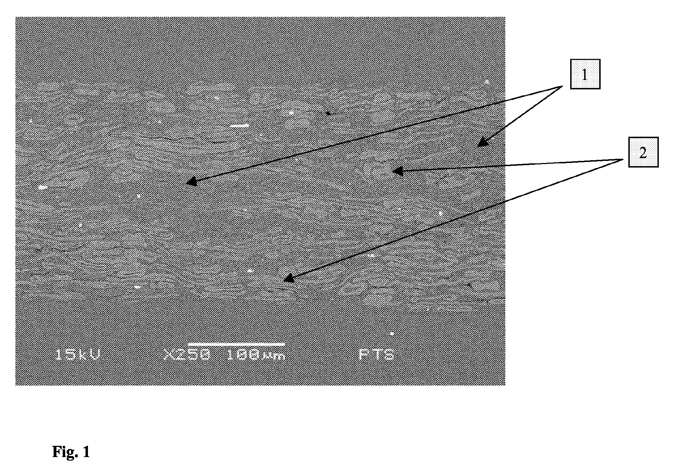

Eine REM-Aufnahme eines Schnittes des Blattes ist in Figur 1 gezeigt. Dabei sind die Bereiche des Nadelholzzellstoffs (2) ebenso wie die Bereiche des Graphits (1) deutlich zu erkennen.

### 2. Rußpapier, unbeschichtet:

Herstellung eines kreisrunden Laborblattes mit einem Durchmesser von 20 cm und einem Flächengewicht von 255 g/m² am Laborblattbildner nach dem Rapid-Köthen-Verfahren:
Zu 950g Zellstoffsuspension (Feststoffgehalt 0,5 Gew.-%) werden 14,25 g kationisches Polymer (Catiofast VFH, Feststoffgehalt 0,2 Gew.-%), 10,55 g Rußpaste (Feststoffgehalt 45 Gew.-%) und 12,5 g Latexemulsion (Feststoffgehalt 4 Gew.-%)zugegeben. Der entstandene Brei wird zu einem Blatt ausgebildet. Das entstandene Blatt wird anschließend getrocknet. Es entsteht ein Papier mit folgender Zusammensetzung:

| **Komponenten:** | **Anteil am Gesamtpapier (atro):** |
|---|---|
| Zellstoff: Nadelholzzellstoff ungebleicht | 48,15 Gew.-% |
| Ruß (Rußpaste, Derussol 345, Degussa) | 46,65 Gew.-% |
| Latex, Hycar 1562X117, Noveon (anionisch) | 4,91 Gew.-% |
| Catiofast VFH, BASF (kat. Polymer) | 0,29 Gew.-% |

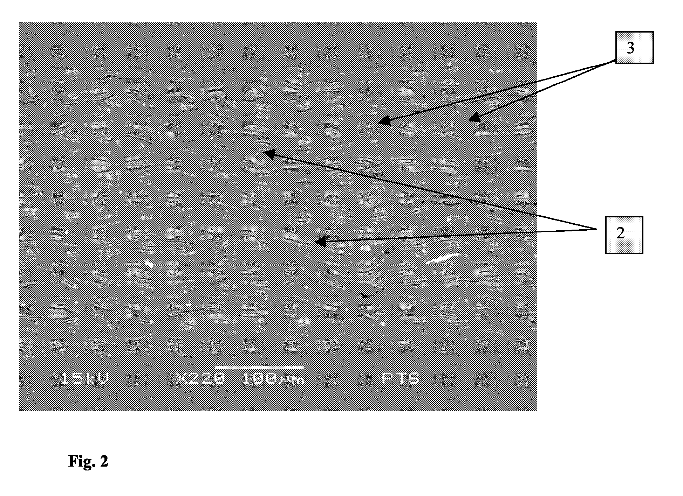

Eine REM-Aufnahme eines Schnittes des Blattes ist in Figur 2 gezeigt. Dabei sind die Bereiche des Nadelholzzellstoffs (2) ebenso wie die Bereiche des Rußes (3) deutlich zu erkennen.

### 3. Ruß/SiC-Papier, beidseitig beschichtet für die Pyrolyse und anschließende Si-Infiltration

Herstellung eines kreisrunden Laborblattes mit einem Durchmesser von 20 cm und einem Flächengewicht von 382 g/m² am Laborblattbildner nach dem Rapid-Köthen-Verfahren:
Zu 547g Zellstoffsuspension (Feststoffgehalt 0,5 Gew.-%) werden 12 g kationisches Polymer (Catiofast VFH, Feststoffgehalt 0,2 Gew.-%), 8 g Rußpaste (Feststoffgehalt 45 Gew.-%), 7,2 g SiC-Slurry (Feststoffgehalt 50 Gew.-%), 2,4 g Buchenmehlslurry (Feststoffgehalt 50 Gew.-%) und 21 g Latexemulsion (Feststoffgehalt 4 Gew.-%) zugegeben. Das entstandene Blatt wird anschließend getrocknet. Es entsteht ein Papier mit folgender Zusammensetzung:

| **Komponenten:** | **Anteil am Gesamtpapier (atro):** |
|---|---|
| Zellstoff: Nadelholzzellstoff ungebleicht | 22,7 Gew.-% |
| Ruß (Rußpaste, Derussol 345, Degussa) | 30 Gew.-% |
| SiC-Pulver (F1200, ESK-SIC GmbH, Ø < 5 µm) | 30 Gew.-% |
| Holzmehl Buche (HW630 PU, JRS, Ø < 50 µm) | 10 Gew.-% |
| Latex, Hycar 1562X117, Noveon (anionisch) | 7 Gew.-% |
| Catiofast VFH, BASF (kat. Polymer) | 0,2 Gew.-% |

Anschließend erfolgt eine Beschichtung des Papiers mit einem Schlicker, der folgende Zusammensetzung aufweist:

| | |
|---|---|
| Ruß (Rußpaste, Derussol 345, Degussa) | 30 Gew.-% (atro) |
| SiC-Pulver (F1200, ESK-SIC GmbH, Ø < 5 µm) | 30 Gew.-% (atro) |
| Holzmehl Buche (HW630 PU, JRS, Ø < 50 µm) | 28 Gew.-% (atro) |
| Latex, Aconal 360 D, BASF | 12 Gew.-% (atro) |

Dabei beträgt der Feststoffgehalt der Rußpaste 48 Gew.-%, der Feststoffgehalt der SiC-Pulver-Slurry 70 Gew.-%, der Feststoffgehalt der Holzmehlslurry 50 Gew.-% und der Feststoffgehalt der Latexemlusion 4 Gew.-%. Der Feststoffgehalt der resultierenden Beschichtungsslurry oder des -schlickers beträgt 50%. Die Beschichtungsslurry wird mittels Rakel mit einer Schichtdicke von 100 µm aufgetragen. Bei der Pyrolyse zeigte das beschichtete Papier einen Gewichtsverlust von 28%. Über eine anschließende Infiltration mit flüssigem Silizium bei 1400°C wird eine Si-SiC-Keramik hergestellt.

## Patentansprüche

1. Mit Kohlenstoff angereicherte(s) Papier oder Pappe, wobei das Papier oder die Pappe mindestens einen Faserstoff und mindestens einen Füllstoff aufweist, **dadurch gekennzeichnet, dass** das Papier oder die Pappe Kohlenstoff als Füllstoff aufweist, wobei der Gehalt an Kohlenstoff mindestens 15 Vol.-%, bezogen auf das Feststoffvolumen des Papiers oder der Pappe, beträgt, und wobei der Gesamtfüllstoffgehalt aller vorliegenden Füllstoffe von 30-90 Gew.-%, bezogen auf das trockene Gesamtgewicht des Papiers oder der Pappe, oder von 25 bis 90 Vol.-%, bezogen auf das Feststoffvolumen des Papiers oder der Pappe, beträgt.

2. Papier oder Pappe gemäß Anspruch 1, **dadurch gekennzeichnet, dass** der Gehalt an Kohlenstoff mindestens 20 Vol.-%, bevorzugt mindestens 25 Vol.-% und besonders bevorzugt mindestens 40 Vol.-% beträgt, und/oder der Gesamtfüllstoffgehalt 40-70 Vol.-%, bezogen auf das Feststoffvolumen des Papiers oder der Pappe, beträgt.

3. Papier oder Pappe gemäß einem oder mehreren der vorhergehenden Ansprüche, **dadurch gekennzeichnet, dass** der Kohlenstoff in Form von Graphit, Aktivkohle, Ruß, Diamant, Diamantstaub, Fullerenen, Kohlenstoff-Nanotubes oder Kohlenstofffasern vorliegt.

4. Papier oder Pappe gemäß einem oder mehreren der vorhergehenden Ansprüche, **dadurch gekennzeichnet, dass** das Papier oder die Pappe neben Kohlenstoff als Füllstoff weitere Füllstoffe aufweist.

5. Papier oder Pappe gemäß einem oder mehreren der vorhergehenden Ansprüche, **dadurch gekennzeichnet, dass** als weitere Füllstoffe neben Kohlenstoff metallische Füllstoffe, bevorzugt Metalle, besonders bevorzugt Aluminium, Kupfer, Silizium, und/oder keramische Füllstoffe, bevorzugt Carbide, Oxide, Nitride und Boride, besonders bevorzugt Siliziumcarbid, Borcarbid, Titancarbid, Aluminiumoxid, Zirkoniumoxid, Titandioxid, Siliziumnitrid, Aluminiumnitrid, Bornitrid und Titanborid, und/oder ligno-cellulosehaltige Füllstoffe und/oder organische Füllstoffe, bevorzugt Phenolharze, verwendet werden.

6. Papier oder Pappe gemäß einem oder mehreren der vorhergehenden Ansprüche, **dadurch gekennzeichnet, dass** der Kohlenstoff und/oder die weiteren Füllstoffe als Pulver und/oder Fasern, bevorzugt mit einer Partikelgröße und/oder einem Faserdurchmesser von weniger als 50 µm, besonders bevorzugt mit einer Partikelgröße von weniger als 30 µm vorliegen.

7. Papier oder Pappe gemäß einem oder mehreren der vorhergehenden Ansprüche, **dadurch gekennzeichnet, dass** das Papier oder die Pappe zusätzlich organische Bindemittel, bevorzugt Phenolharze, enthält.

8. Papier oder Pappe gemäß einem oder mehreren der vorhergehenden Ansprüche, **dadurch gekennzeichnet, dass** das Papier oder die Pappe als Faserstoff Sulfatzellstoff, Sulfitzellstoff, nach thermomechanischem Verfahren (TMP) hergestellter Zellstoff, nach chemo-thermomechanischem Verfahren (CTMP) hergestellter Zellstoff, Baumwolle, Linters und/oder Holzschliff und deren Mischungen, enthält.

9. Papier oder Pappe gemäß einem oder mehreren der vorhergehenden Ansprüche, **dadurch gekennzeichnet, dass** das Papier oder die Pappe eine Dicke von 50 bis 20000 µm, bevorzugt von 100 bis 1500µm aufweist.

10. Papier oder Pappe gemäß einem oder mehreren der vorhergehenden Ansprüche, **dadurch gekennzeichnet, dass** das Papier oder die Pappe zusätzlich Benetzungs- und/oder Dispergiermittel, bevorzugt kationisch- und/oder anionisch-stabilisierende Mittel enthält.

11. Papier oder Pappe gemäß einem oder mehreren der vorhergehenden Ansprüche, **dadurch gekennzeichnet, dass** das Papier oder die Pappe zusätzlich ein Retentionsmittel, bevorzugt geladenen Latex und/oder geladene Stärke, wobei der geladene Latex oder die geladene Stärke in einer Menge von 0,2-15 Gew.-%, insbesondere bevorzugt in einer Menge von 1-10 Gew.-%, bezogen auf das trockene Gesamtgewicht des Papiers oder der Pappe, vorliegen, enthält.

12. Papier oder Pappe gemäß Anspruch 11, **dadurch gekennzeichnet, dass** das Papier oder die Pappe als Retentionsmittel Polyvinylamin, Polyacrylamid, Polyamidamin, Aluminiumsulfat und/oder Bentonit, bevorzugt in einer Menge von 0,01 bis 7 Gew.-%, besonders bevorzugt von 0,1 bis 2 Gew.-%, bezogen auf das trockene Gesamtgewicht des Papiers oder der Pappe, enthält.

13. Papier oder Pappe gemäß einem oder mehreren der vorhergehenden Ansprüche, **dadurch gekennzeichnet, dass** das Papier oder die Pappe bei der vollständigen Pyrolyse einen Gewichtsverlust von weniger als 50 Gew.-%, bevorzugt weniger als 40 Gew.-%, insbesondere bevorzugt weniger als 30 Gew.-%, und am bevorzugtesten weniger als 20 Gew.-%, bezogen auf das trockene Gesamtgewicht des Papiers oder der Pappe, aufweist.

14. Papier oder Pappe gemäß einem oder mehreren der vorhergehenden Ansprüche, **dadurch gekennzeichnet, dass** das Papier oder die Pappe papiertechnisch geformt vorliegt, bevorzugt als Wellpappe, Waben- oder Rohrstruktur.

15. Verwendung eines Papiers oder einer Pappe gemäß einem oder mehreren der vorhergehenden Ansprüche als Luftfilter, Sorptionsmedium für Gase oder Flüssigkeiten, als Elektrode, insbesondere als Batterieelektrode, oder im ABC-Schutz.

16. Verfahren zur Herstellung eines mit Kohlenstoff angereicherten Papiers oder Pappe gemäß einem oder mehreren der Ansprüche 1-14 mit den Schritten:
- Vermischen mindestens eines Faserstoffs und mindestens eines Füllstoffs, der Kohlenstoff enthält, in einem Lösungsmittel zu einem Brei;
- Verarbeiten des Breis zu einem Papier und/oder einer Pappe.

17. Verfahren nach Anspruch 16, **dadurch gekennzeichnet, dass** beim Vermischen des Faserstoffs mit dem Füllstoff weitere Zusatzstoffe, bevorzugt Benetzungs- und/oder Dispergier- und/oder Retentionsmittel, zugegeben werden.

18. Verfahren zur Beschichtung eines Papiers oder einer Pappe gemäß einem oder mehreren der Ansprüche 1-14 , wobei das Papier oder die Pappe mit einem Schlicker beschichtet wird.

19. Verfahren nach Anspruch 17, **dadurch gekennzeichnet, dass** der Schlicker organische Bindemittel und/oder kohlenstoffhaltige und/oder keramische und/oder metallische und/oder ligno-cellulosehaltige Zusatzstoffe in Form von Pulvern und/oder Fasern umfasst.

20. Verfahren zur Pyrolyse eines Papiers oder einer Pappe gemäß einem oder mehreren der Ansprüche 1-14 oder 17-19, **dadurch gekennzeichnet, dass** das in Form eines Grünkörpers hergestellte Papier oder die Pappe einer Pyrolyse unterworfen wird.

21. Verfahren nach Anspruch 20, **dadurch gekennzeichnet, dass** die Pyrolyse in Inertgasatmosphäre bei einer Temperatur bis 1200°C, bevorzugt bis 800°C durchgeführt wird.

22. Pyrolysiertes Papier oder Pappe, hergestellt nach einem Verfahren gemäß einem der Ansprüche 20-21.

23. Verwendung eines pyrolysierten Papiers oder einer pyrolysierten Pappe gemäß Anspruch 22 als Luftfilter, Sorptionsmedium für Gase oder Flüssigkeiten, als Elektrode, insbesondere als Batterieelektrode, im ABC-Schutz, als dünnwandiges Konstruktionsmaterial oder für eine Brennstoffzelle.

24. Verfahren zum Sintern eines Papiers oder einer Pappe gemäß einem oder mehreren der Ansprüche 1-14 oder eines pyrolysierten Papiers oder Pappe gemäß Anspruch 22, **dadurch gekennzeichnet, dass** das Papier oder die Pappe bei einer Temperatur von über 1200°C, bevorzugt über 1400°C gesintert wird.

25. Verfahren zum Infiltrieren eines mit Kohlenstoff angereicherten Papiers oder Pappe gemäß einem oder mehreren der Ansprüche 1-14 oder eines pyrolysierten Papiers oder einer pyrolysierten Pappe gemäß Anspruch 22, **dadurch gekennzeichnet, dass** das Papier oder die Pappe mit einem flüssigen Metall infiltriert wird.

26. Verfahren zum Infiltrieren nach Anspruch 25, **dadurch gekennzeichnet, dass** das Metall Silizium, Aluminium oder Kupfer ist.

27. Verfahren zum Infiltrieren nach einem oder mehreren der Ansprüche 23-25, **dadurch gekennzeichnet, dass** das Infiltrieren in Inertgasatmosphäre und/oder bei einer Temperatur bis 1800°C durchgeführt wird.

28. Keramischer Körper, hergestellt nach einem Verfahren gemäß einem oder mehreren der Ansprüche 25-27.

29. Keramischer Körper nach Anspruch 28, **dadurch gekennzeichnet, dass** der Körper Bereiche mit Kohlenstoff aufweist.

30. Keramischer Körper nach Anspruch 28 oder 29, **dadurch gekennzeichnet, dass** der Körper eine Si-SiC-Keramik ist.

31. Verwendung eines keramischen Körpers gemäß einem oder mehreren der Ansprüche 28-30 bei der Mikro-, Ultra- oder Nanofiltration, für keramische Porenbrenner, als Keramik-Bauelemente, insbesondere für keramische Wärmetauscher und für Dünnschichtsolarzellen.
